# EUROPÄISCHE PATENTSCHRIFT

(11) **EP 0 846 616 B1**
(45) Veröffentlichungstag und Bekanntmachung des Hinweises auf die Patenterteilung: **18.02.2004**
(21) Anmeldenummer: 97119596.1
(22) Anmeldetag: 08.11.1997
(51) Int. Cl.: B64C 1/14

(54) **Fenster für ein Flugzeug mit einer Druckkabine**
Window for an aircraft with a pressurised cabin
Fenêtre pour aéronef à cabine pressurisée

(30) Priorität: 05.12.1996 DE 19650416
(43) Veröffentlichungstag der Anmeldung: 10.06.1998
(73) Patentinhaber: Airbus Deutschland GmbH, 21129 Hamburg (DE)
(72) Erfinder: Meyer, Jürgen, Dipl.-Ing., 22607 Hamburg (DE)
(74) Vertreter: Hansmann, Dierk, Dipl.-Ing.

(56) Entgegenhaltungen:
- EP-A- 0 322 776
- GB-A- 2 225 368
- US-A- 3 452 553
- US-A- 4 979 342

## Beschreibung

Die Erfindung bezieht sich auf ein Fenster für ein Flugzeug mit einer Druckkabine, insbesondere für ein Passagierflugzeug, gemäß dem Oberbegriff des Anspruchs 1. Solch ein Fenster ist aus der EP-A-0 322 776 bekannt. Diese Fenster sollen sowohl eine ungehinderte Sicht nach draußen gewährleisten als auch den statischen Innendruck der Kabine dauerhaft aufnehmen. Weiterhin sollen die Fenster genau der Außenkontur des Rumpfes angepaßt sein, damit durch die Fenster kein aerodynamischer Zusatzwiderstand entsteht. Bekannte Flugzeugfenster dieser Art weisen aus Zuverlässigkeitsgründen zwei Fensterscheiben in einer Doppelanordnung auf, und zwar eine relativ dickwandige Fensterscheibe von hoher Dauerfestigkeit, beispielsweise bestehend aus gerecktem Acrylglas, die Hauptscheibe, und eine relativ dünnwandige Fensterscheibe von geringerer Dauerfestigkeit, beispielsweise hergestellt aus gehärtetem Mineralglas, die im folgenden Zusatzscheibe genannt wird. Die hochwertigere Hauptscheibe ist dabei als Außenscheibe und die dünne Zusatzscheibe als Innenscheibe angeordnet. Die außen liegende Hauptscheibe nimmt im Normalfall den Kabineninnendruck auf. Die innen liegende Zusatzscheibe wird im normalen Betrieb durch den Innendruck nicht belastet. Beide Scheiben sind an ihren Rändern von einem gemeinsamen Dichtprofil eingefaßt und bilden so eine Baugruppe, die von innen in den strukturseitigen Fensterrahmen eingesetzt und gesichert ist. Der zwischen beiden Scheiben befindliche Hohlraum steht über eine dünne Bohrung mit dem Innenraum der Kabine in Verbindung. Geht die Hauptscheibe zu Bruch, so übernimmt die Zusatzscheibe die volle Last des Innendrucks, wobei lediglich sichergestellt sein muß, daß der Flug ohne Totalausfall des betreffenden Fensters ordnungsgemäß beendet werden kann. Die Hauptscheibe biegt sich unter der Last des Innendrucks nach außen durch. Die damit verbundene Materialdehnung erleichtert den Angriff von außen auf die Fensteroberfläche einwirkender Schadstoffe . Die Durchbiegung wirkt sich daher sehr ungünstig auf die Lebensdauer der hochwertigen Hauptscheiben aus. Außerdem verursacht die Durchbiegung der Außenscheiben einen zusätzlichen aerodynamischen Widerstand. Dringt feuchte Luft in den Hohlraum ein, können die Scheiben beschlagen, so daß die Sicht nach draußen behindert wird.

Demgemäß liegt der Erfindung die Aufgabe zugrunde, ein gattungsgemäßes Fenster derart auszubilden, daß dessen Lebensdauer wesentlich verlängert und ein aerodynamischer Zusatzwiderstand vermieden wird.

Diese Aufgabe wird bei einer gattungsgemäßen Anordnung durch die kennzeichnenden Merkmale des Patentanspruchs 1 gelöst.

Dabei ist insbesondere von Vorteil, daß eine erheblich gesteigerte Lebensdauer der Hauptscheibe und der Zusatzscheibe erreicht wird. Eine weitere vorteilhafte Wirkung der Erfindung besteht darin, daß die Außenscheiben keine Durchbiegung erfahren, so daß kein aerodynamischer Zusatzwiderstand auftritt.

Eine weitere Aufgabe, die durch die Erfindung gelöst wird, besteht darin, das Beschlagen bzw. Verunreinigen der Scheiben durch Fremdkörper zu vermeiden.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Ansicht eines Kabinenfensters,
- Fig. 2: den Schnitt II-II nach Fig.1,
- Fig. 3: die Einzelheit III nach Fig.2,
- Fig. 4: den Schnitt IV-IV nach Fig.1,
- Fig. 5: das Fenster nach Fig.3 mit einer Einrichtung zur Druckregelung und
- Fig. 6: das Fenster nach Fig.3 mit einer Membrananordnung.

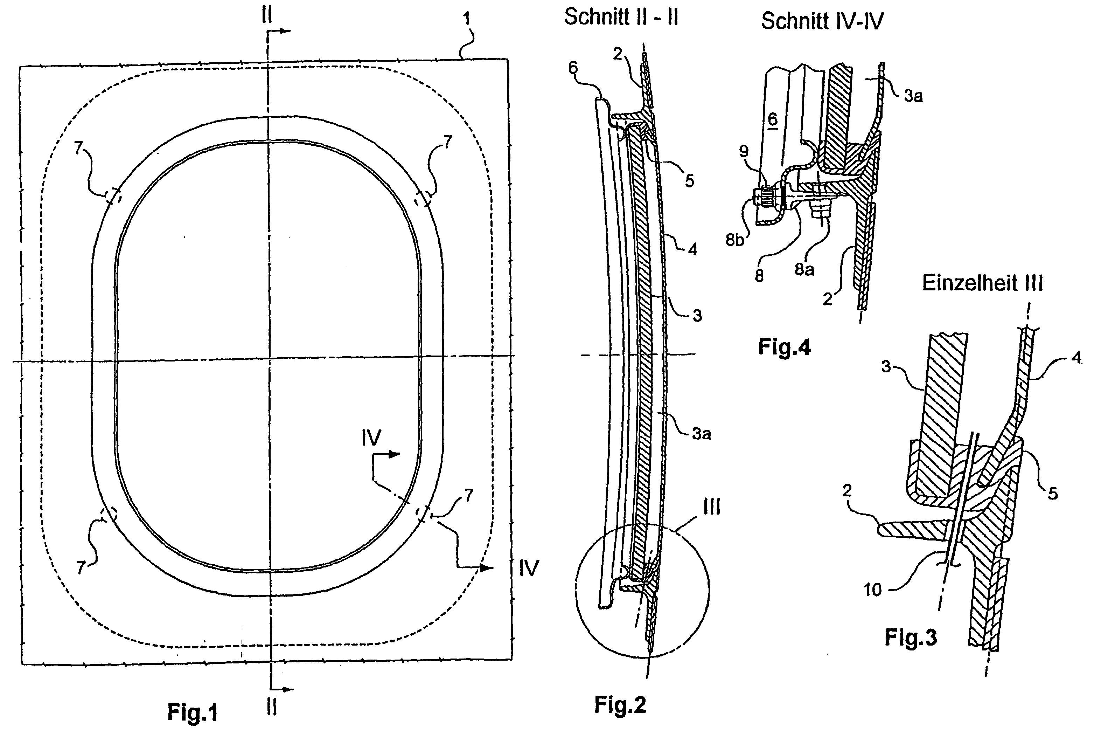

Die Figuren 1, 2 und 3 zeigen ein Kabinenfenster in der Rumpfhaut 1, wobei die betreffende Fensteröffnung durch einen Fensterrahmen 2 ausgesteift ist. Eine Hauptscheibe 3 und eine Zusatzscheibe 4 sind mittels eines Dichtprofils 5 zusammengefaßt und schließen einen Hohlraum 3a ein. Die so gebildete Baugruppe ist dann in den Fensterrahmen 2 eingesetzt und durch einen Fixierrahmen 6 gesichert. Der Fixierrahmen 6 ist seinerseits an vier Stellen 7, wie noch gezeigt wird, mit dem Fensterrahmen 2 verbunden. Dabei ist vorgesehen, daß die Hauptscheibe 3 als Innenscheibe und die Zusatzscheibe 4 als Außenscheibe ausgebildet ist und der Hohlraum 3a mit einer Einrichtung zur Druckregelung in Verbindung steht. Diese Einrichtung gleicht den Innerhalb des Hohlraums 3a bestehenden Luftdruck an den jeweils herrschenden Umgebungsdruck des Flugzeuges an.

Figur 3 zeigt den unteren Bereich des Dichtprofils 5 mit dem Fensterrahmen 2, der Hauptscheibe 3 und der Zusatzscheibe 4 in vergrößerter Darstellung. In dem Dichtprofil 5 befindet sich ein Kanal, in den ein dünnes Rohr 10 so eingeführt ist, daß dieses mit dem zwischen den beiden Scheiben befindlichen Hohlraum 3a in Verbindung steht. Das Rohr 10 steht mit der Einrichtung zur Angleichung des Luftdrucks in Verbindung.

Figur 4 zeigt den Schnitt IV-IV nach Fig.1, der durch eine der Stellen 7 geführt ist, an denen der Fixierrahmen 6 mit dem Fensterrahmen 2 verbunden ist. Hier ist ein kleiner Beschlag 8, der zum Fixierrahmen 6 hin ein Außengewinde 8b aufweist, an dem Fensterrahmen 2 durch einen Niet 8a befestigt. Zum Festziehen der Verbindung dient eine Mutter 9.

Befindet sich ein Flugzeug im Steigflug, so baut sich innerhalb der Kabine ein gegenüber der Umgebung des Flugzeuges wirkender Überdruck auf, der in Reiseflughöhe seinen maximalen Wert erreicht. Ist das Flugzeug mit erfindungsgemäßen Fenstern ausgerüstet, so wird der in dem zwischen der innen angeordneten Hauptscheibe und der außen angeordneten Zusatzscheibe befindlichen Hohlraum 3a herrschende Luftdruck an den Luftdruck der Umgebung angeglichen. Hierdurch wird erreicht,
1. daß die außen angeordnete Zusatzscheibe keine Durchbiegung erfährt,
2. daß die Außenscheibe infolge fehlender Materialdehnung eine wesentlich höhere Beständigkeit gegen aggressive Medien aufweist und
3. daß keine von außen angreifenden Schadstoffe mit der hochwertigen Innenscheibe in Kontakt kommen.

Diese Wirkungen haben zur Folge, daß die Lebensdauer, insbesondere der Innenscheibe, an die des Flugzeuges angeglichen wird. Die Notwendigkeit, beschädigte Fensterscheiben zu erneuern, wird damit stark reduziert oder entfällt ganz.

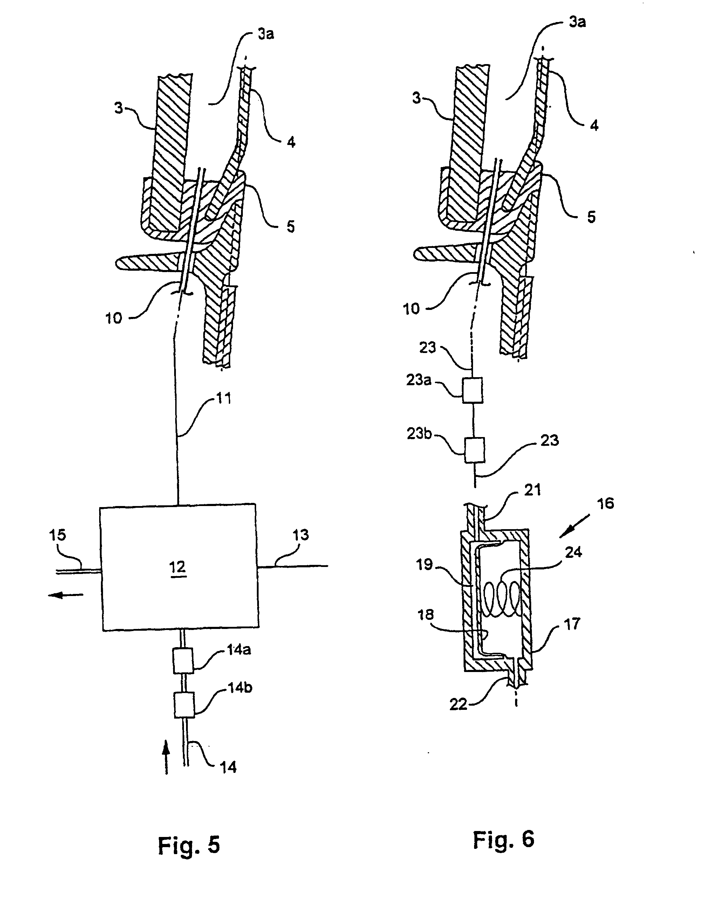

Figur 5 zeigt das Fenster nach Fig.3 mit den beiden Scheiben 3 und 4 mit dem Hohlraum 3a, dem Dichtprofil 5 und dem Rohr 10, das über eine Leitung 11 mit einer Einrichtung 12 zur Druckregelung in Form einer elektrisch geregelten Pneumatikpumpe in Verbindung steht. Die Einrichtung 12 wird über eine Leitung 13 mit elektrischer Energie versorgt. Durch die Einrichtung 12 wird der innerhalb des Hohlraumes 3a herrschende Luftdruck an den Umgebungsdruck angeglichen. Die Einrichtung 12 pumpt einerseits Luft aus dem Hohlraum 3a ab, wenn in diesem der Druck gegenüber der Umgebung des Flugzeuges zunimmt und leitet die abgepumpte Luft über einen Auslaßstutzen 15 in die Kabine. Andererseits läßt die Einrichtung 12 über einen Einströmkanal 14 Luft in den Hohlraum zurückströmen, wenn der Druck im Hohlraum 3a gegenüber der Umgebung abnimmt. Hierdurch wird die äußere Scheibe 4 vor einer Durchbiegung und deren Folgen geschützt. Die Einrichtung 12 kann beispielsweise durch eine Proportional-Luftdruck-Regeleinrichtung von der Firma JOUCOMATIC GmbH, D-75248 Ölbronn-Dürrn, realisiert sein. Diese Einrichtung wird unter der Bezeichnung "SENTRONIC" hergestellt.

Eine Ausgestaltung der Lösung mit einer Pneumatikpumpe besteht darin, daß in den Einströmkanal 14 Mittel 14a bzw. 14b zum Trocknen bzw. Reinigen der in den Hohlraum 3a einströmenden Luft eingeschaltet sind. Durch das Trocknen der Luft, beispielsweise durch eine Silikagel enthaltende Patrone 14a, wird erreicht, daß beide Scheiben 3,4 vom Hohlraum 3a her nicht beschlagen können. Die Patrone 14a kann auch als Lufttrockner, basierend auf einer Membranschicht realisiert sein. Ein derartiger Membrantrockner wird beispielsweise unter der Bezeichnung "DRYPOINT" von der Firma BeKo Kondensat-Technik GmbH, D-41468 Neuss, hergestellt. Zum Reinigen der Luft kommt beispielsweise ein Mikro-Luftfilter 14b in Betracht. Durch das Reinigen wird verhindert, daß die dem Hohlraum 3a zugewandten Oberflächen der Scheiben 3,4 durch Fremdkörper verunreinigt werden.

Figur 6 zeigt das Fenster nach Fig.5 mit einer anderen Einrichtung zur Druckregelung. Diese besteht aus einer Doppelkammer-Membran-Anordnung 16 mit einem Gehäuse 17, das durch eine Membran 18 in zwei Kammern 19 und 20 geteilt wird. An jede Kammer 19,20 ist ein Anschlußstutzen 21 bzw. 22 angeschlossen. Der Anschlußstutzen 21 ist über eine Ventilationsleitung 23 mit dem Hohlraum 3a verbunden. Der Anschlußstutzen 22 steht mit der Umgebung des Flugzeuges in Verbindung. Die Membran 18 wird durch eine Feder 24 in die dargestellte Ruhelage gebracht. Befindet sich das Flugzeug am Boden, so nimmt die Membran 18 diees Lage ein. In der Ruhelage der Membran 18 weist das Volumen der Kammer 19 seinen Minimalwert und das der Kammer 20 seinen Maximalwert auf. Wenn das Flugzeug nach dem Start an Höhe gewinnt und der Umgebungsdruck abfällt, fließt Luft aus der Kammer 20 ab. Dabei muß die Membran 18 den neuen Druckverhältnissen folgen und nimmt eine neue Lage im Bild weiter rechts von der Ruhelage ein. Hierdurch verringert sich das Volumen der Kammer 20, wohingegen sich das Volumen der Kammer 19 vergrößert. Die Anordnung 16 ist so dimensioniert, daß der im Hohlraum 3a herrschende Druck für den in Betracht kommenden Außendruckbereich weitgehend an den Umgebungsdruck des Flugzeuges angeglichen wird.

Eine Ausgestaltung der Lösung mit einer Doppelkammer-Membran-Anordnung besteht darin, daß in die Ventilationsleitung 23 Mittel 23a bzw. 23b zum Trocknen bzw. Reinigen der in den Hohlraum 3a einströmenden Luft eingeschaltet sind.

Es ist auch denkbar, daß die Mittel zum Trocknen der Luft unmittelbar in der Kammer 19 eingelagert werden.

## Patentansprüche

1. Fenster für ein Flugzeug mit einer Druckkabine, insbesondere für ein Passagierflugzeug mit einer Doppelanordnung von Fensterscheiben, wobei eine Hauptscheibe (3) von hoher Dauerfestigkeit und eine Zusatzscheibe (4) von geringerer Dauerfestigkeit mittels eines Dichtprofils (5) in einem Fensterrahmen (2) gelagert sind, und die beiden Scheiben mit dem Dichtprofil (5) einen Hohlraum (3a) einschließen, dem eine Ventilationsleitung (11,23) verbinden ist, **dadurch gekennzeichnet, daß** die Hauptscheibe (3) als Innenscheibe und die Zusatzscheibe (4) als Außenscheibe angeordnet ist und die Ventilationsleitung (11, 23) mit einer Einrichtung (12,16) zur Druckregelung verbinden ist, die eine elektrisch geregelte Pneumatikpumpe mit einem Einströmkanal (14) oder eine Doppelkammer-Membran-Anordnung (16) ist.

2. Fenster nach Anspruch 1,
**dadurch gekennzeichnet, daß** in den Einströmkanal (14) Mittel (14a) zum Trocknen der in den Hohlraum (3a) einströmenden Luft eingeschaltet sind.

3. Fenster nach Anspruch 1,
**dadurch gekennzeichnet, daß** in den Einströmkanal (14) Mittel (14b) zum Reinigen der in den Hohlraum (3a) einströmenden Luft eingeschaltet sind.

4. Fenster nach Anspruch 1,
**dadurch gekennzeichnet, daß** in die Ventilationsleitung (11, 23) Mittel (14a, 23a) zum Trocknen der durchströmenden Luft eingeschaltet sind.

5. Fenster nach Anspruch 1,
**dadurch gekennzeichnet, daß** in die Ventilationsleitung (11, 23) Mittel (14b, 23b) zum Reinigen der durchströmenden Luft eingeschaltet sind.

6. Fenster nach Anspruch 1,
**dadurch gekennzeichnet, daß** die Mittel (23a) zum Trocknen der Luft unmittelbar in einer Kammer (19) der Doppel-Membran-Anordnung (16) eingelägert sind.

## Claims

1. Window for an aircraft with a pressurised cabin, in particular for a passenger aircraft, said window having a double arrangement of window panes, wherein a main pane (3) having high fatigue strength and an additional pane (4) having lower fatigue strength are mounted in a window frame (2) by means of a sealing profile (5), and the two panes enclose, with said sealing profile (5), a cavity (3a) to which a ventilating line (11, 23) is connected, **characterised in that** the main pane (3) is arranged as the inner pane and the additional pane (4) is arranged as the outer pane, and the ventilating line (11, 23) is connected to an apparatus (12, 16) for regulating pressure, which is an electrically regulated pneumatic pump with an inflow duct (14), or a double-chamber diaphragm arrangement (16).

2. Window according to claim 1,
**characterised in that** means (14a) for drying the air flowing into the cavity (3a) are interpolated in the inflow duct (14).

3. Window according to claim 1,
**characterised in that** means (14b) for cleaning the air flowing into the cavity (3a) are interpolated in the inflow duct (14).

4. Window according to claim 1,
**characterised in that** means (14a, 23a) for drying the air flowing through are interpolated in the ventilating line (11, 23).

5. Window according to claim 1,
**characterised in that** means (14b, 23b) for cleaning the air flowing through are interpolated in the ventilating line (11, 23).

6. Window according to claim 1,
**characterised in that** the means (23a) for drying the air are incorporated directly into a chamber (19) in the double-diaphragm arrangement (16).

## Revendications

1. Fenêtre pour aéronef à cabine pressurisée, plus particulièrement pour un avion de passager avec double vitrage, une vitre principale (3) ultra-résistante et une vitre complémentaire (4) à résistance plus limitée ayant été disposées dans un châssis de fenêtre (2) à l'aide d'un profil d'étanchéité (5) et les deux vitres décrivant avec le profil d'étanchéité (5) un espace creux (3a) auquel est raccordé une conduite d'aération, et
**caractérisée en ce que** la vitre principale (3) a été disposée comme vitre intérieure et la vitre complémentaire (4) comme vitre extérieure et **en ce que** la conduite d'aération (11, 23) est raccordée à un dispositif de réglage de la pression consistant en une pompe pneumatique réglée électriquement avec un canal d'admission ou en un montage chambre double - membrane (16).

2. Fenêtre selon la revendication 1, **caractérisée en ce que** des moyens de séchage (14a) de l'air entrant dans l'espace creux (3a) ont été raccordés au canal d'admission (14).

3. Fenêtre selon la revendication 1, **caractérisée en ce que** des moyens de nettoyage (14b) de l'air entrant dans l'espace creux ont été raccordés au canal d'admission (14).

4. Fenêtre selon la revendication 1, **caractérisée en ce que** des moyens de séchage (14a, 23a) de l'air de passage ont été raccordés à la conduite d'aération (11, 23).

5. Fenêtre selon la revendication 1, **caractérisée en ce que** des moyens de nettoyage (14b, 23b) de l'air de passage ont été raccordés à la conduite d'aération (11, 23).

6. Fenêtre selon la revendication 1, **caractérisée en ce que** les moyens de séchage (23a) de l'air sont logés directement dans une chambre (19) du montage chambre double - membrane (16).
